# EUROPEAN PATENT SPECIFICATION

(11) **EP 1 792 708 B1**
(45) Date of publication and mention of the grant of the patent: **17.05.2017**
(21) Application number: 06380313.4
(22) Date of filing: 27.11.2006
(51) Int. Cl.: B29C 70/74, B29C 70/68, B29C 53/56, B29C 70/86, B29C 70/20, B29C 70/32, B29C 70/38, F16C 7/02, B29K 105/08, B29K 309/08, B29K 307/04, B29K 311/10, B29K 277/00, B29K 267/00, B29K 77/00, B29K 71/00, B29K 233/04, B29K 23/00, B29K 67/00, B29K 81/00, B29K 307/00

(54) **Method of manufacture of parts reinforced with a thermoplastic reinforcing fibre part**
Verfahren zur Herstellung eines Teiles, verstärkt mit einem Faserteil und einem thermoplastischen Kunststoff
Procédé de fabrication d'une pièce renforcée avec des fibres et du thermoplastique

(30) Priority: 02.12.2005 ES 200502998
(43) Date of publication of application: 06.06.2007
(73) Proprietor: FPK Lightweight Technologies, S. Coop., 48170 Zamudio ( Bizkaia) (ES)
(72) Inventor: Martinez-Cue Pesini, Javier, 48013 Bilbao (ES)
(74) Representative: Urteaga Simarro, José Antonio

(56) References cited:
- EP-A2- 0 431 916
- WO-A-98/08655
- WO-A1-01/77771
- GB-A- 836 501
- GB-A- 1 134 033
- GB-A- 1 279 016
- JP-A- S5 845 021
- JP-A- 61 049 833
- US-A- 4 594 122
- US-A- 5 415 463
- US-A- 6 073 670
- US-A1- 2003 010 424

## Description

### Technical field

The invention concerns the reinforcement of plastic parts which are produced in thermoplastic or thermostable injection or compression processes

### Prior art

Due to their specific final purpose or other reasons, some types of plastic parts need to be reinforced in order to provide the part with specific properties, which plastic alone cannot offer. One such example is a structural part of a vehicle, which must fulfil some determined requirements, such as providing a high impact resistance without an excessive weight. These requirements demand that a structural part of a vehicle is reinforced with additional materials or parts, distributed in a specific way so as to provide optimum reinforcement without excessively increasing the final weight of the reinforced structural part.

In the current technology situation, there are diverse solutions for the reinforcement of a plastic part, which can be grouped into two main concepts. The first concept is based on the idea that the plastic part is reinforced during its conformation, by adding a material or a pre-shaped part to the injection process of the plastic part. An example of this first concept basically entails the use of a steel plate as reinforcement, and the transformation of the reinforced plastic part by means of a plastic overmoulding process applied to the steel plate. In this process, the physical connection between the plastic and the steel is usually achieved by making a series of perforations in the steel plate, which are penetrated by the plastic during the over moulding process.

The second concept is based on the idea that the plastic part is reinforced after shaping, by assembling it to a reinforcing part which has already been shaped and is generally made of metal. The assembly of the plastic part to the reinforcing part is generally carried out using screws, rivets, formation of plastic junctions by ultrasound or other appropriate assembly methods.

A further concept is shown in patent application no. GB1134033A, which teaches the manufacture of a filament reinforced hollow article by directly applying a filament on a bladder, inflating the bladder to create a reinforcing tension between the filament and the inflated bladder, and finally allow the bladder and reinforcing filament to consolidate.

All plastic part reinforcement solutions aim to improve the relatively low impact resistance of plastic, the relatively low rigidity of plastic and the limited capacity of plastic to stretching without breaking. The reinforcement generally used is metallic, as metal offers complementary qualities to those of plastic. However, the use of metal presents certain disadvantages, namely, an excessive increase in weight of the final part, certain recycling difficulties of the final part (as recycling requires the separation of the plastic and the metal) and an increase in the final cost of the part.

### Brief description of the invention

The object of the invention is to define a method of manufacture of a composite part according to claim 1.

Optionally, the reinforcing winding may be discontinuous or may not be unidirectional, although it is considered that the embodiment with the best mechanical performance is that in which the fibre-based filament is arranged as a continuous cord that is unidirectionally oriented along the specific reinforcement contour of the main part. The unidirectional framework provides a reinforcing performance comparable to common metal reinforcements in the current technology situation, without negatively affecting the final weight of the reinforced part.

The fibre part may be two- or three-dimensional, whereby two-dimensional is understood to be a fibre part whose apexes, inflection points or other characteristic points which may exist in the wound part are fundamentally located on the same plane, whilst a three-dimensional fibre part is understood to be a part in which not all of these characteristic points are located substantially coplanar. The three-dimensional fibre part embodiments are useful for example to ensure that the fibre part adapts to the shape of the main part, which is not generally flat but usually presents a complex three-dimensional geometry as a result of the varied functions which the final structural reinforced part should incorporate. Furthermore, given the limited space in the vehicle, the fibre part which reinforces the main part must normally be limited to the free spaces within the main part (spaces not used by other components connected to the main part), which increases the complexity of the three-dimensional form of the fibre part. In addition, the fact that the fibre part presents a three-dimensional geometry allows said fibre part to offer a greater rigidity to flexing and twisting in diverse axes, improving its reinforcing performance compared with two-dimensional fibre part embodiments.

As far as the connection between the fibre part and the main part is concerned, the invention discloses three preferred embodiments. A first embodiment is inherent to the case of direct application of the fibre filament onto the main part, as the fibre part and the main part are become welded as a consequence of this direct application.

### Brief description of the figures

The details of the invention can be seen in the accompanying figures, which do not intend to limit the scope of the invention:
- Figure 1 shows an enlarged partial view of a reinforced part that can be manufactured by a method according to the invention.
- Figure 2 shows a complete reinforced part that can be manufactured by a method according to the invention.
- Figure 3 shows an enlarged partial view of the reinforced part in Figure 2.
- Figures 4 to 13 show partial views of different embodiments of the reinforced part according to the invention.
- Figure 14 shows an example of a method of manufacture of the fibre part and the reinforced part according to the invention.

### Detailed description of the invention

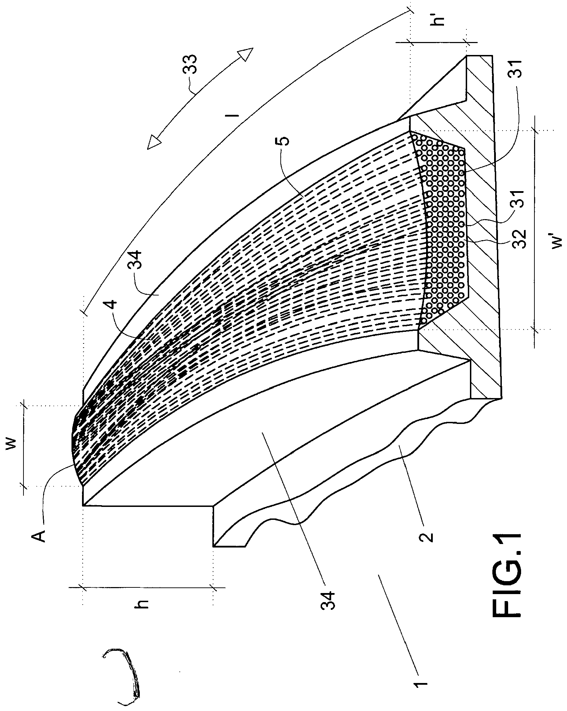

Figure 1 shows an enlarged partial view of a reinforced part (1) according to the invention, consisting of a main part (2) and a fibre part (4) produced by the arrangement of one or more fibre-based filaments (5) in a unidirectional and continuous manner. The aim of this figure is to illustrate the meaning of the unidirectional and continuous concepts for the purposes of the invention, and for this aim the figure supposed a main part (2) that is a thermoplastic or thermostable part which needs to be reinforced in a specific region or contour represented in the figure by a zone with length (1) and variable width (w, w') and height (h, h'). The solution presented by the invention is to provide this contour with a series of fibre-based filaments (5) arranged in a substantially unidirectional manner, i.e., mainly aligned (allowing certain variations) in the longitudinal direction (33) of the contour. In the case of the figure, the fibre-based filaments (5) are made of fibre filaments (31) equipped with a matrix material (32), and are arranged along the contour in a continuous manner, i.e., without interruption of the fibre-based filament (5) during the conformation of the fibre part (4), in such a way that all fibre-based filaments (5) are part of the same cord. In the case of the figure, it can be observed that the fibre part (4) is positioned between two walls (34) of the main part (2).

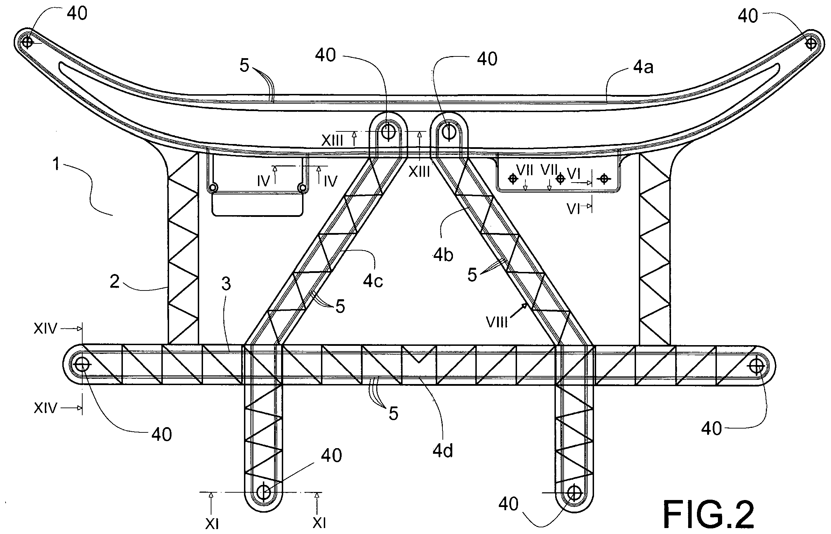

Figure 2 shows a full view of a reinforced part (1) according to the invention. The reinforced part (1) consists of the aforementioned main part (2), generally made out of a thermoplastic material, and a reinforcement (3). In the case of the figure, the reinforcement (3) comprises four fibre parts (4a, 4b, 4c, 4d) in the shape of a cord or fibre-based filament (5) arranged in a variable number of loops and in a continuous manner along the respective contours of the main part (2). As can be observed in the figure, in this case, each fibre part (4a, 4b, 4c, 4d) presents a different arrangement, shape and/or size and may consist of the same or a different number of loops of the fibre-based filament (5), may be produced from a similar or different type of fibre-based filament (5), etc.

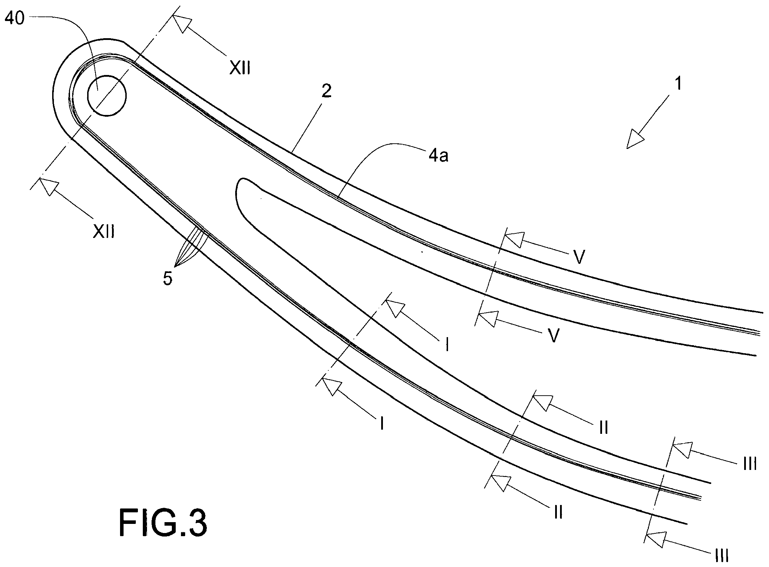

Figure 3 shows an enlarged partial view of the reinforced part (1) of Figure 2, representing different section planes, which shall give rise to subsequent figures.

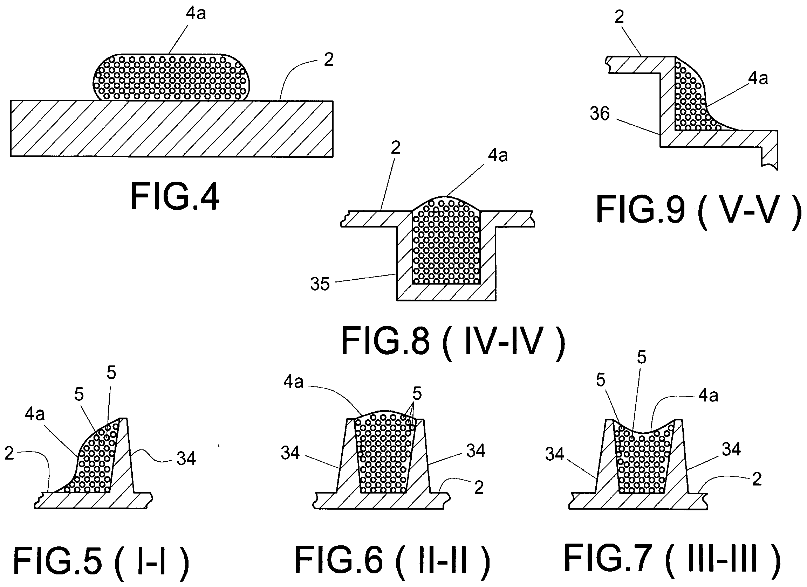

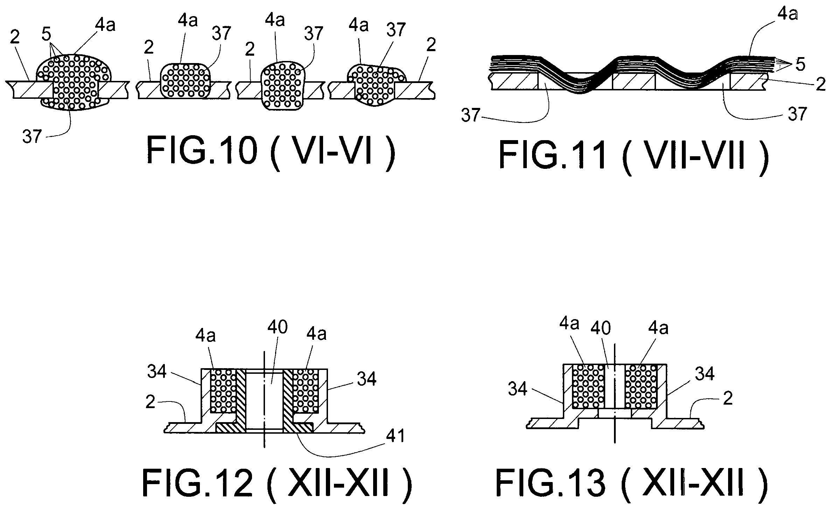

Figures 4 to 10 show several examples of constructive elements which ensure the correct welding of a fibre part (4a) applied directly onto the main part (2). Figure 4 shows a more simplified case, in which the fibre part (4a) has been directly applied to a predominantly flat surface of the main part (2), and both parts (4a, 2) have been successfully welded together thanks to the chemical compatibility between both parts. Figure 5 (section I-I of Figure 3) shows that the main part (2) comprises a nerve or wall (34) against which the fibre part (4a) is also applied, so that the contact surface between parts (2, 4a) is increased and the welding between both parts (2, 4a) is improved. Figures 6 and 7 (sections II-II and III-III of Figure 3 respectively) show alternatives in which the main part (2) has two nerves or walls (34) inside which the fibre-based filaments (5) are arranged to form the fibre part (4a), further increasing the contact area between parts (2, 4a). Figures 8 (section IV-IV of Figure 2) and 9 (section V-V of Figure 3) show two alternatives in which specific shapes of the main part (2) are used, particularly a channel (35) and an angle (36) respectively, as the area on which the fibre part (4a) is received. Figure 10 shows different possible versions of section VI-VI of Figure 2, which are common in the fact that the fibre part (4a) is conformed by using some orifices (37) present in the main part (2). The versions represented in Figure 10 would correspond, for example, to a lengthwise section VII-VII of the type shown in Figure 11.

Figures 12 and 13 show sections of two different anchoring points (40) that connect the reinforced part (1) to the vehicle, and where the tension between the reinforced part (1) and the vehicle is concentrated and transferred. A metal bushing (41) may optionally be fitted to these anchoring points (40) to avoid the problem of "cripping" (the easing of tension that occurs due to loads being maintained over time) of the plastics and polymeric materials in general.

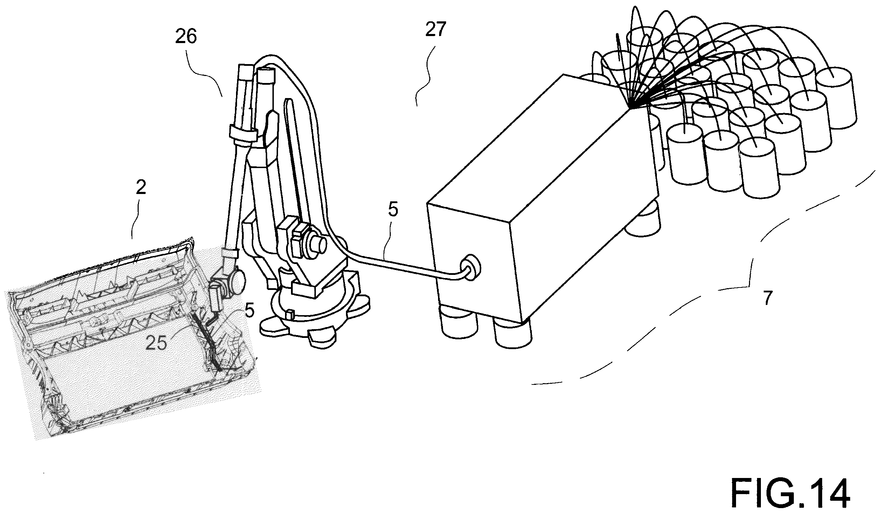

Figure 14 shows an example of a method of manufacture (27) of a three-dimensional fibre part (4) in accordance with the invention, based on a fibre-based filament (5) arranged in a unidirectional and continuous manner. In this method of manufacture (27), an application means (26) performs a direct application of the fibre-based filament (5) to a two-dimensional or three-dimensional reception area (25) that is located in the main part (2) itself, i.e., in a fundamental part of the reinforced part (1). In other words, the method of manufacture (27) mainly consists of the direct application and adhesion of the fibre-based filament (5) to the part to be reinforced. The fibre-based filament (5) is pre-heated and is equipped with a coating, made out of a material which is chemically compatible with the material that the main part (2) is made of. Once the fibre-based filament (5) has been directly applied to the main part (2), both parts (2, 4) become welded when the fibre part (4) cools down and consolidates. The surfaces of the main part (2) may be prepared prior to applying the fibre-based filament (5) in order to optimize the welding process, whereby this preparation may consist of a pre-blazing of the surface of the main part (2), a chemical treatment, a heat application by contact, a convection of air or gas, a jet of air or gas, etc. Furthermore, the invention contemplates the refrigeration of the fibre-based filament (5) to accelerate its consolidation, for example, the application of a jet of air or gas at an appropriate temperature.

The winding of the fibre-based filament (5) may be of any type, i.e., it may or may not include an overlapping or intertwining of the different loops of the fibre-based filament (5), a variable number of loops of the fibre-based filaments (5), or in general any variance which may be given to the winding.

In the method of the present invention, a filament which is generally referred to as "fibre-based filament" is used. This denomination is used throughout this document in order to encompass the possible types of fibre filaments used. On one hand, the invention contemplates the use of a "fibre-based filament" made of a fibre filament with a resin coating. On another hand, the "fibre-based filament" can be a fibre filament combined with polymeric matrix filaments. The resin coating and the polymeric matrix are made of thermoplastic resin, and may be applied to a fibre filament by means of an impregnation process. In those cases in which the "fibre-based filament" has a resin coating or is accompanied by a polymeric matrix (the most common when using thermoplastic resins), it is necessary to subject the filament to a pre-heating process and/or pre-cooling process for its correct handling. In any case, for the purpose of the present invention, these pre-heating or pre-cooling processes are considered to be part of the process to obtain the "fibre-based filament", which forms the starting point of the processes defined by the invention. On another hand, the "fibre-based filament" may consist of various fibre filaments interlinked or grouped in any manner. On another hand, the fibre used to shape the fibre-based filament may be fibre glass, carbon fibre, polyester fibre, natural fibre or another suitable fibre. In this sense, the fibre-based filament may either consist of fibres of a single type (for example, only fibre glass) or combine different types of fibre.

In certain cases, especially depending on the type of fibre-based filament (5) that is used, the aforementioned method of manufacture may consider certain actions which allow the temperature of the fibre-based filament (5) to be controlled.

## Claims

1. Method of manufacture (27) of a reinforced part (1) comprising a main part (2) and at least one reinforcing fibre part (4a), comprising the steps of:
- preheating a fibre-based filament (5) comprising at least one fibre filament coated with a thermoplastic resin or a fibre filament combined with thermoplastic matrix filament,
- directly applying, by means of an application means (26), at least one preheated fibre-based filament (5) on the main part (2), there existing a relative movement between said application means (26) and said main part (2) so that the fibre-based filament (5) becomes arranged on the main part (2) forming an in-situ fibre part (4a) made of fibre-based filament (5), and
- allowing the fibre part (4a) to cool and consolidate, thereby producing the in-situ welding of the fibre part (4a) and the main part (2), the reinforced part (1) thus being obtained, wherein
- the fibre part (4a) is arranged on at least one constructive element (34, 35, 36, 37, 41) comprised in the main part (2).

2. Method of manufacture (27) of a reinforced part (1), according to claim 1, wherein the fibre-based filament (5) is arranged in a substantially unidirectional manner on the main part (2).

3. Method of manufacture (27) of a reinforced part (1), according to claim 1, wherein the fibre-based filament (5) is arranged in a substantially continuous manner on the main part (2).

4. Method of manufacture (27) of a reinforced part (1), according to claim 1, wherein the main part (2) is subjected to a pre-blazing, a chemical treatment, a heat application by contact, a convection of air or gas, and/or a jet of air or gas, prior to the direct application of the fibre-based filament (5), to optimize the in-situ welding process of the fibre part (4a) and the main part (2).

5. Method of manufacture (27) of a reinforced part (1), according to claim 1, wherein the fibre part (4a) is substantially two-dimensional.

6. Method of manufacture (27) of a reinforced part (1), according to claim 1, wherein the fibre part (4a) is substantially three-dimensional.

7. Method of manufacture (27) of a reinforced part (1), according to claim 1, wherein the fibre-based filament (5) further comprises a coating made out of a material which is chemically compatible with a material that the main part (2) is made of.

8. Method of manufacture (27) of a reinforced part (1), according to claim 1, wherein the fibre filament (31) is made out of at least one fibre belonging to the set of fibres consisting of glass fibre, carbon fibre, natural fibres and polyester fibres.

9. Method of manufacture (27) of a reinforced part (1), according to claim 1, wherein at least one constructive element (34, 35, 36, 37, 41) comprises a nerve or wall (34).

10. Method of manufacture (27) of a reinforced part (1), according to claim 1, wherein at least one constructive element (34, 35, 36, 37, 41) comprises a channel (35).

11. Method of manufacture (27) of a reinforced part (1), according to claim 1, wherein at least one constructive element (34, 35, 36, 37, 41) comprises an angle (36).

12. Method of manufacture (27) of a reinforced part (1), according to claim 1, wherein at least one constructive element (34, 35, 36, 37, 41) comprises an orifice (37).

13. Method of manufacture (27) of a reinforced part (1), according to claim 1, wherein at least one constructive element (34, 35, 36, 37, 41) comprises a metal bushing (41).

## Patentansprüche

1. Methode zur Herstellung (27) eines verstärkten Teils (1), das ein Hauptteil (2) und wenigstens ein verstärkendes Faserteil (4a) umfasst, und folgende Schritte umfasst:
- Vorwärmen eines faserbasierten Filaments (5), bestehend aus wenigstens einem Faserfilament, beschichtet mit einem thermoplastischen Kunststoff, oder einem Faserfilament, kombiniert mit einem thermoplastischem Matrixfilament,
- direkte Anwendung mit Hilfe von Anwendungsmitteln (26) von wenigstens ein vorgewärmtes faserbasiertes Filament (5) am Hauptteil (2), wobei eine relative Bewegung zwischen besagten Anwendungsmitteln (26) und besagtem Hauptteil (2) existiert, so dass das faserbasierte Filament (5) am Hauptteil (2) angeordnet wird und ein Faserteil (4a) vor Ort bildet, das aus faserbasiertem Filament (5) besteht, und
- es dem Faserteil (4a) ermöglicht, abzukühlen und sich zu festigen, wobei das Schweißen des Faserteils (4a) und des Hauptteils (2) vor Ort erfolgt, und so der verstärkte Teil (1) erhalten wird, wobei
- das Faserteil (4a) auf wenigstens einem konstruktiven Element (34, 35, 36, 37, 41) angeordnet ist, das im Hauptteil (2) enthalten ist.

2. Methode zur Herstellung (27) eines verstärkten Teils (1), gemaß Anspruch 1, wobei das faserbasierte Filament (5) Im Wesentlichen in einer Richtung an dem Hauptteil (2) angeordnet ist.

3. Methode zur Herstellung (27) eines verstärkten Teils (1), gemäß Anspruch 1, wobei das faserbaslerte Filament (5) Im Wesentlichen durchgehend an dem Hauptteil (2) angeordnet ist.

4. Methode zur Herstellung (27) eines verstärkten Teils (1), gemäß Anspruch 1, wobei der Hauptteil (2) einem Vorglühen, einer chemischen Behandlung, einer Wärmeanwendung durch Kontakt, einer Konvektion von Luft oder Gas, und/oder einem Luft- oder Gasstrahl unterzogen wird, vor der direkten Anwendung des faserbasierten Filaments (5), zur Optimierung des Schweißverfahrens des Faserteils (4a) und des Hauptteils (2) vor Ort.

5. Methode zur Herstellung (27) eines verstärkten Teils (1), gemäß Anspruch 1, wobei das Faserteil (4a) im Wesentlichen zweidimensional ist.

6. Methode zur Herstellung (27) eines verstärkten Teils (1), gemäß Anspruch 1, wobei das Faserteil (4a) im Wesentlichen dreidimensional ist.

7. Methode zur Herstellung (27) eines verstärkten Teils (1), gemäß Anspruch 1, wobei das faserbasierte Filament (5) ferner eine Beschichtung aus einem Material umfasst, das chemisch verträglich mit einem Material ist, aus dem das Hauptteil (2) besteht.

8. Methode zur Herstellung (27) eines verstärkten Teils (1), gemäß Anspruch 1, wobei das Faserfilament (31) aus wenigstens einer Faser besteht, die zu der Fesergruppe bestehend aus Glas-, Kohle-, Natur- und Polyesterfasern gehört.

9. Methode zur Herstellung (27) eines verstärkten Teils (1), gemäß Anspruch 1, wobei wenigstens ein konstruktives Element (34, 35, 36, 37, 41) einen Nerv oder eine Wand (34) umfasst.

10. Methode zur Herstellung (27) eines verstärkten Teils (1), gemäß Anspruch 1, wobei wenigstens ein konstruktives Element (34, 35, 36, 37, 41) einen Kanal (35) umfasst.

11. Methode zur Herstellung (27) eines verstärkten Teils (1), gemäß Anspruch 1, wobei wenigstens ein konstruktives Element (34, 35, 36, 37, 41) einen Winkel (36) umfasst.

12. Methode zur Herstellung (27) eines verstärkten Teils (1), gemäß Anspruch 1, wobei wenigstens ein konstruktives Element (34, 35, 36, 37, 41) eine Öffnung (37) umfasst.

13. Methode zur Herstellung (27) eines verstärkten Teils (1), gemäß Anspruch 1, wobei wenigstens ein konstruktives Element (34, 35, 36, 37, 41) eine Metallbuchse (4 I) umfasst.

## Revendications

1. Méthode de fabrication (27) d'une pièce renforcée (1) comprenant une pièce principale (2) et au moins une pièce en fibre renforcée (4a) et comprenant les étapes suivantes :
- préchauffage d'un filament à base de fibre (5) comprenant au moins un filament de fibre revêtu d'une résine thermoplastique ou un filament de fibre combiné avec un filament à matrice thermoplastique,
- application directe au moyen d'un outil d'application (26) d'un moins un filament à base de fibre préchauffé (5) sur la pièce principale (2), constituant ainsi un mouvement relatif entre lesdits moyens d'application (26) et ladite pièce principale (2) de telle sorte que le filament à base de fibre (5) se positionne sur la pièce principale (2) pour former une pièce de fibre in-situ (4a) constituée d'un filament à base de fibre (5) et
- en permettant à la pièce de fibre (4a) de refroidir et se consolider, produisant par conséquent la soudure in-situ de la pièce de fibre (4a) et la pièce principale (2), la pièce renforcée (1) étant par conséquent fabriquée, où la pièce en fibre (4a) est disposée sur au moins un élément de construction (34, 35, 36, 37, 41) compris dans la pièce principale (2).

2. Méthode de fabrication (27) d'une pièce renforcée (I) conformément à la revendication 1, où le filament à base de fibre (5) est disposé d'une manière unidirectionnelle principalement sur la pièce principale (2).

3. Méthode de fabrication (27) d'une pièce renforcée (I) conformément à la revendication 1, où le filament à base de fibre (5) est disposé d'une manière continue principalement sur la pièce principale (2).

4. Méthode de fabrication (27) d'une pièce renforcée (1) conformément à la revendication 1, où la pièce principale (2) est soumise à un traitement chimique de pré-braisage, une application de chaleur par contact, une conviction d'air ou de gaz et/ou un jet d'air ou de gaz, avant l'application directe du filament à base de fibre (5) pour optimiser l'opération de soudure in-situ de la pièce de fibre (4a) et la pièce principale (2).

5. Méthode de fabrication (27) d'une pièce renforcée (1) conformément à la revendication 1, où la pièce en fibre (4a) est principalement en deux dimensions.

6. Méthode de fabrication (27) d'une pièce renforcée (1) conformément à la revendication 1, où la pièce en fibre (4a) est principalement en trois dimensions.

7. Méthode de fabrication (27) d'une pièce renforcé (1) conformément à la revendication 1, où le filament à base de fibre (5) comprend également un revêtement fait en un matériau chimiquement compatible avec un matériau dont la pièce principale (2) est constituée.

8. Méthode de fabrication (27) d'une pièce renforcée (1) conformément à la revendication 1, où le filament en fibre (31) est fait d'au moins une fibre appartenant à l'ensemble de fibres comprend la fibre de verre, la fibre de carbone, les fibres naturelles et les fibres en polyester.

9. Méthode de fabrication (27) d'une pièce renforcée (1) conformément à la revendication 1, où au moins un élément de construction (34, 35, 36, 37,41) comprend une nervure ou une paroi (34).

10. Méthode de fabrication (27) d'une pièce renforcée (1) conformément à la revendication 1. où au moins un élément de construction (34, 35, 36, 37, 41) comprend un canal (35).

11. Méthode de fabrication (27) d'une pièce renforcée (1) conformément à la revendication 1, où au moins un élément de construction (34, 35, 36, 37, 41) comprend un angle (36).

12. Méthode de fabrication (27) d'une pièce renforcée (1) conformément à la revendication 1, où au moins un élément de construction (34, 35, 36, 37, 41) comprend un orifice (37).

13. Méthode de fabrication (27) d'une pièce renforcée (1) conformément à la revendication 1, où au moins un élément de construction (34, 35, 36, 37, 41) comprend une bague métallique (4 I).
